# EUROPÄISCHE PATENTSCHRIFT

(11) **EP 2 770 943 B1**
(45) Veröffentlichungstag und Bekanntmachung des Hinweises auf die Patenterteilung: **16.09.2015**
(21) Anmeldenummer: 12786818.0
(22) Anmeldetag: 25.10.2012
(51) Int. Cl.: A61C 8/00

(54) **ZAHNERSATZ ENTHALTEND EIN METALLGERÜST**
DENTAL PROSTHESIS COMPRISING A METALLIC FRAME
PROTHÈSE DENTAIRE COMPRENANT UN SUPPORT MÉTALLIQUE

(30) Priorität: 27.10.2011 DE 102011117035
(43) Veröffentlichungstag der Anmeldung: 03.09.2014
(73) Patentinhaber: Dentsply Implants Manufacturing GmbH, 68229 Mannheim (DE)
(72) Erfinder: DEGIDI, Marco, 40139 Bologna (IT)
(74) Vertreter: Schmitt, Meinrad
(86) Internationale Anmeldenummer: PCT/EP2012/004463
(87) Internationale Veröffentlichungsnummer: WO 2013/060458

(56) Entgegenhaltungen:
- EP-A2- 1 212 985
- WO-A1-00/27556
- US-A- 3 514 858
- US-A1- 2008 171 307
- Peter Gehrke ET AL: "Intra-oral welding of temporary implant abutments with a pre-fabricated titanium bar", implants 3.2005, 1. Januar 2005 (2005-01-01), XP055050942, Gefunden im Internet: URL:http://www.dentistaitaliano.it/documen ts/Impants.3.2005-Gehrke.Degidi.Spanel.Dho m.Piattelli.pdf [gefunden am 2013-01-24] in der Anmeldung erwähnt

## Beschreibung

Die Erfindung bezieht sich auf einen Zahnersatz, enthaltend ein Metallgerüst gemäß den im Oberbegriff des Patentanspruchs 1 angegebenen Merkmalen.

Ein derartiger Zahnersatz ist aus der EP-A-1 212 985 bekannt, wobei ein Metallgerüst mit einer Kappe vorgesehen ist. Die Kappe enthält zwei Zapfen und ist mittels einer Schraube mit einem Implantat verbunden. Nach Herstellung der Verbindung der Kappe mit dem Implantat wird das drahtförmige Verbindungselement in eine Nut zwischen den genannten Zapfen eingesetzt, wobei zur Festlegung des Verbindungselements die genannten Zapfen verpresst werden. Die Kappe enthält eine Durchgangsbohrung, durch welche die genannte Schraube durchgreift.

Weiterhin ist aus der WO-A-00 27 556 bekannt, Kappen mittels Schrauben mit den zugehörigen Implantaten zu verbinden. Mit den Kappen ist ein Aufbauteil gleichfalls mittels Schrauben verbunden, wobei ein Verbindungselement die Aufbauteile verbindet.

Aus der US-A-2008 171 307 ist ein System zur Herstellung von Dentalimplantatkronen und Brücken mit vorgefertigten Teilen bekannt. Das System enthält Kappen mit koaxialen Zapfen, und die Verbindungselemente sind als Formteile ausgebildet. Mittels der Formteile werden formschlüssige Verbindungen miteinander und / oder mit den Zapfen der Kappen ermöglicht.

Weiterhin ist ein Zahnersatz und das Verfahren zur Herstellung des Zahnersatzes in der Zeitschrift "implants", Ausgabe 3_2005 in dem Bericht "Intra-oral welding of temporary implant abutments with a pre-fabricated titanium bar" beschrieben. Der Zahnersatz enthält ein Metallgerüst, welches insbesondere aus Titan oder einer Titanlegierung besteht und eine oder mehrere Kappen sowie ein Verbindungselement in Form eines Drahtes oder eines Steges enthält. Die Kappen und das Verbindungselement sind durch Elektroschweißen miteinander verbunden, wobei die Verbindungsbereiche an den, insbesondere der Zunge zugewandten, Außenflächen der Kappen liegen. Die Kappe oder Kappen enthalten innen einen Hohlraum und sind an ihren einem Implantat abgewandten Ende offen ausgebildet. Die Kappen werden nach der Implantation von Dentalimplantaten in einen Kiefer auf Aufbauteile der Dentalimplantate aufgesetzt und nachfolgend wird in der Mundhöhle bzw. intra-oral die Schweißverbindung mit dem Verbindungselement hergestellt. Hierbei werden zwei mit einem Schweißgerät verbundene Elektroden, welche insbesondere Bestandteil einer Zange sind, derart angelegt, dass die eine Elektrode an der Außenfläche des Verbindungselements anliegt und die andere Elektrode an der gegenüberliegenden Seite der Kappe anliegt und mit vorgegebenen Anpressdruck für die Durchführung der Schweißung angepresst werden. Auf Grund des nicht unerheblichen Abstandes zwischen der Außenfläche des Verbindungselements und der genannten gegenüberliegenden Außenfläche der Kappe weisen die Elektroden und/oder die genannte Zange ein entsprechend großes Bauvolumen auf, wodurch die Handhabung unter Berücksichtigung der engen Platzverhältnisse in der Mundhöhle Schwierigkeiten bereitet.

Hiervon ausgehend liegt der Erfindung die Aufgabe zu Grunde, der Zahnersatz bzw. das Metallgerüst dahingehend weiterzubilden, dass mit einem geringen konstruktiven Aufwand eine verbesserte Handhabung und eine erleichterte Herstellung der insbesondere intra-oralen Schweißverbindung ermöglicht werden. Sowohl der Arbeitsaufwand als auch das Bauvolumen des zur Durchführung der Schweißverbindung erforderlichen und insbesondere als Zange ausgebildeten Gerätes, welches insbesondere die vorgenannten Elektroden enthält, sollen reduziert werden. Ferner soll eine Kappe bereitgestellt werden, welche eine einfache Handhabung und/oder eine problemfreie Herstellung der Verbindung mit dem Verbindungselement ermöglicht. Des Weiteren sollen die auf die Kappe und letztendlich auf das Metallimplantat sowohl bei der Herstellung der Schweißverbindung als auch während der Nutzungsdauer des Zahnersatzes wirksamen Kräfte und Drehmomente verringert werden.

Die Lösung dieser Aufgabe erfolgt gemäß den im Patentanspruch 1 angegebenen Merkmalen.

Der erfindungsgemäße Zahnersatz zeichnet sich durch einen einfachen und gleichwohl funktionsgerechten Aufbau aus, wobei der als axiale Verlängerung der Kappe ausgebildete Zapfen vom Zahnarzt in einfacher Weise mit den Fingern ergriffen werden kann und somit die Kappe problemlos auf das zugeordnete Aufbauteil des in den Kiefer implantierten Dentalimplantats aufgesetzt werden kann. Der Zahnersatz ist eine prothetische Versorgung, welche in einfacher Weise herstellbar ist und eine hohe Stabilität aufweist, und ist als Prothese. Brücke oder Einzelzahnversorgung ausgebildet. Der Zapfen ist integraler Bestandteil der Kappe und weist einen erheblich kleineren Außendurchmesser auf als die Kappe an ihren dem Dentalimplantat abgewandten Bereich. Es wird eine achsnahe Anordnung und Befestigung des Verbindungselements erreicht, wodurch in vorteilhafter Weise eine Reduzierung einer Hebelwirkung auf das Dentalimplantat und/oder einwirkenden Kräften oder Drehmomenten erreicht wird. Auf Grund des reduzierten Durchmessers des Zapfens kann das die Schweißelektroden enthaltene und bevorzugt als Zange ausgebildete Gerät für einen nicht unerheblich verringerten Abstand der Elektroden ausgebildet werden und ein dementsprechend geringeres Bauvolumen und Gewicht aufweisen, so dass die Handhabung erleichtert wird. Der Innenraum der Kappe ist an ihrem dem Dentalimplantat abgewandten Ende insbesondere mittels einer Decke geschlossen ausgebildet, wobei die Decke ebenso wie der mit dieser, bevorzugt einstückig, verbundene Zapfen integrale Bestandteile der Kappe sind. Die Kappe oder Kappen besitzen bevorzugt konische Innenflächen, korrespondierend zu konischen Außenflächen der Aufbauteile. Die innere Geometrie der den Zapfen aufweisenden Kappe ist angepasst an die Geometrie des Aufbauteils des jeweiligen Implantatsystems. In einfacher Weise kann somit durch Ausbildung der inneren Geometrie der Kappe korrespondierend zur Außengeometrie der Aufbauteile unterschiedlicher Implantatsysteme der Zahnersatz bzw. das Metallgerüst zum Einsatz gelangen. Die Kappe oder Kappen sind vorgefertigt oder Standardkomponenten, an welche im Mund des Patienten das Verbindungselement, welches als Draht aus Metall ausgebildet ist, angeschweißt wird. Somit wird vom Zahnarzt ein stabiles Metallgerüst unmittelbar im Mundraum eines Patienten hergestellt, welches bevorzugt in einem Dentallabor, in eine insbesondere schalenförmig vorbereitete Prothetik eingegossen wird. Im Rahmen der Erfindung erfolgt das Aushärten des Materials der Prothetik bevorzugt nach deren Einsetzen in die Mundhöhle, wobei die miteinander erfindungsgemäß verbundenen Kappen auf die jeweiligen zugeordneten Aufbauteile aufgesetzt werden und / oder sind. Eine Anfertigung eines Abdrucks zur Erfassung der Position und Ausrichtung der Dentalimplantate bzw. deren Aufbauteile ebenso wie eine nachträgliche Fertigung, insbesondere durch Gießen, der Kappen des Metallgerüsts im Dentallabor entfallen. In vorteilhafter Weise wird eine erheblich größere Präzision erreicht.

Weiterhin wird eine erhöhte Retention auf Grund einer Isodromie oder Gleichausrichtung der Kappe oder Kappen von zumindest näherungsweise und/oder im Wesentlichen 3,5° bis 6,5°, insbesondere 4° bis 5,5° erreicht. Der Öffnungswinkel der bevorzugt konischen Innenfläche der Kappe oder Kappen bzw. deren Innengeometrie ist doppelt so groß vorgegeben wie die vorgenannten Winkelgrade. Eine derartige Retention ist besonders vorteilhaft und optimiert die Stabilität der Prothetik bzw. des Zahnersatzes, welcher insbesondere als Prothese, Brücke oder Einzelzahnversorgung ausgebildet ist. Ferner wird im Falle einer festen Verbindung, insbesondere einer zementierten Verbindung, die Stabilität der implantatgetragenen Zahnversorgung oder des Zahnersatzes verbessert. Des Weiteren wird die Abmessung des prothetischen Elements oder Systems bzw. des Zahnersatzes umfassend das Aufbauteil und die Kappe oder Kappen erfindungsgemäß reduziert, wodurch in bevorzugter Weise für die perimplantäre biologische Weite ein größerer Raum für die perimplantäre Verbindung und/oder das Anwachsen von Epitel- und Knochengewebe erreicht wird. Der erfindungsgemäße Zahnersatz ist sowohl für eine, insbesondere bei neu gesetzten Dentalimplantaten, sofort belastbare Versorgung als auch für eine nachträgliche Versorgung nach einer Anheilphase des oder der Dentalimplantate ausgebildet.

Obgleich die Verbindung der Kappe mit dem Verbindungselement als Schweißverbindung sich als besonders vorteilhaft erwiesen hat, kann im Rahmen der Erfindung alternativ eine andere Verbindungstechnik, nämlich Kleben oder Löten vorgesehen sein. Zur Herstellung der Verbindung gelangt ein dementsprechend ausgebildetes Handgerät zum Einsatz, mit welchem beispielsweise zum Kleben der erforderliche Anpressdruck des Verbindungselements an den Zapfen aufgebracht wird und/oder die Wärmeenergie zum Aushärten des Klebemittels. Für eine Lötverbindung ist das Handgerät derart ausgebildet, dass das Verbindungselement sicher zur Anlage an den Zapfen gebracht wird und zudem das Lot oder Lötmittel in der erforderlichen Weise erwärmt und/oder aufschmilzt. Für die jeweiligen Verbindungstechniken gelten die hinsichtlich der Schweißverbindung aufgezeigten Maßnahmen und Vorteile analog, wobei an dieser Stelle vor allem auf die einfache Handhabung ebenso hingewiesen sei wie auf den aufgrund des erfindungsgemäß vorgesehenen Zapfens, welchen der Zahnarzt sicher mit seinen Fingern ergreifen kann, um die Kappe problemlos auf das Aufbauteil aufzusetzen.

Besondere Ausgestaltungen und Weiterbildungen der Erfindung sind in den abhängigen Ansprüchen sowie der Zeichnung nebst Beschreibung angegeben.

Die Erfindung wird nachfolgend anhand der in der Zeichnung dargestellten Ausführungsbeispiele näher erläutert, ohne dass insoweit eine Beschränkung erfolgt. Es zeigen in schematischen Darstellungen:
- Fig. 1: teilweise als seitliche Ansicht und als axialer Schnitt die Kappe mit angeschweißtem steifen Metalldraht,
- Fig. 2 bis 5: weitere Ausführungsformen der Kappe,
- Fig. 6, 7: Kappen mit einer seitlichen Bohrung bzw. mit seitlichen Retentionen,
- Fig. 8 bis 11: verschiedene Querschnitte der Zapfen,
- Fig. 12 bis 14: seitliche Ansichten des Zapfens mit unterschiedlichen Querschnitten.

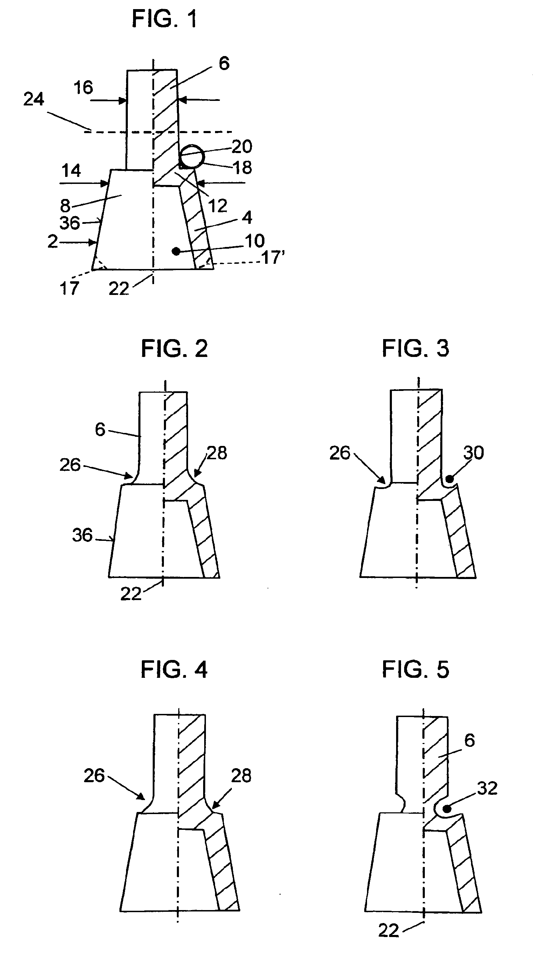

Gemäß Fig. 1 enthält die Kappe 2 einen konischen Mantel 4 und als axiale Verlängerung einen Zapfen 6, welcher im Bereich der Spitze 8 des konischen Mantels 4 angeordnet ist. Die Kappe 2 enthält innen einen Hohlraum 10 derart, dass die Kappe auf ein hier nicht weiter dargestelltes Aufbauteil eines Dentalimplantats in bekannter Weise aufsetzbar und mit dem Aufbauteil verbindbar ist. Die Kappe 2 weist im Bereich der Spitze 8 eine Decke 12 auf, über welche der Zapfen 6 in bevorzugter Weise einteilig mit der Kappe 2 verbunden ist. Der Zapfen 6 schließt bei dieser Ausführungsform im Wesentlichen unter einem rechten Winkel an den Spitzenbereich des Mantels 4 bzw. der Kappe 2 an. Diese Ausführungsform ist in einfacher Weise herstellbar.

Die Kappe 2 bzw. deren Mantel 4 weist im Bereich der Spitze 8 einen Durchmesser 14 auf, welcher um einen vorgegebenen Faktor größer ist als der Durchmesser 16 des Zapfens 6. Die samt dem Zapfen 6 einstückig ausgebildete Kappe 2 besteht aus Metall, insbesondere Titan oder einer Titanlegierung. Ferner weist die Kappe 2 an ihrem anderen dem Zapfen 6 gegenüberliegenden Ende bevorzugt eine sich bevorzugt über den Umfang erstreckende Fase 17 auf, welche ein optimiertes Anwachsen und/oder Anliegen der Schleimhaut ermöglicht. Alternativ zur Fase 17 kann im Rahmen der Erfindung eine konkave oder konvexe Abrundung 17' vorgesehen sein, welche sich gleichfalls über den Umfang erstreckt.

Mit dem Zapfen 6 ist ein als Draht ausgebildetes Verbindungselement 18 insbesondere durch Schweißen verbunden, wie in Figur 1 mittels schwarz unterlegter Fläche 20 angedeutet. Das Verbindungselement 18 besteht zweckmäßig ebenfalls aus Titan oder einer Titanlegierung. Da das Verbindungselement 18 mit dem Zapfen 6 verbunden ist, welcher einen erheblich geringeren Durchmesser 16 als als der Durchmesser 14 der Außenfläche 36 des Mantels 4 der Kappe 2 aufweist, und somit zur Längsachse 22 einen recht geringen Abstand aufweist, sind die Hebelkräfte auf das Dentalimplantat oder Drehmomente im Vergleich mit der Verbindung an der Außenfläche 36 des Mantels 4 erheblich geringer. Der Durchmesser 16 liegt zweckmäßig im Bereich von 1 bis 2,5 Millimeter und beträgt vorteilhaft 1,5 bis 2 Millimeter. Die axiale Länge des Zapfens 6 ist bevorzugt im Bereich von 2 bis 15 Millimeter vorgegeben, vorteilhaft im Bereich von 4 bis 10 Millimeter. Mittels des Verbindungselements 18 erfolgt analog die Verbindung mit wenigstens einer weiteren Kappe des Metallgerüsts des Zahnersatzes.

Zur Herstellung des Metallgerüsts werden zunächst die Kappe 2 sowie die weitere Kappe oder weitere Kappen auf Aufbauteile von zugeordneten in einen Kiefer bereits implantierten Dentalimplantaten aufgesetzt. Es ist von besonderer Bedeutung, dass der Zahnarzt den Zapfen manuell bzw. mit seinen Fingern ergreifen kann und somit die Kappe 2 problemlos auf das Aufbauteil aufsetzen kann. Nachfolgend wird das Verbindungselement 18 entsprechend geformt und an die Zapfen der jeweiligen Kappen angelegt. Daraufhin werden die Verbindungen zwischen dem Verbindungselement 18 und den Zapfen 6 in der Mundhöhle hergestellt, und zwar in bevorzugter Weise durch intraorales Schweißen (intra-oral welding). Die Herstellung der Verbindung erfolgt zweckmäßig durch ein Elektroschweißverfahren, wobei eine Elektrode am Verbindungselement 18 und die andere Elektrode am Zapfen 6 zur Anlage gebracht wird. Die genannten Elektroden sind zweckmäßig Bestandteil eines Handgerätes, insbesondere einer Zange, welche in bekannter Weise mit einem Elektroschweißgerät verbunden ist und mittels welcher der erforderliche Anpressdruck der Elektroden zum Schweißen aufgebracht wird. Da die Elektroden des Handgerätes oder die genannte Zange an dem vergleichsweise dünnen Zapfen 6 und nicht an der Außenfläche des Mantels 4 anzulegen sind, weist das Handgerät eine recht geringe Baugröße auf, wodurch die Handhabung und die Durchführung der Schweißung in der Mundhöhle erheblich erleichtert wird. Femerwird mit hoher Sicherheit ein Abrutschen des Handgerätes vermieden. Nach Herstellung der Schweißverbindung wird in bevorzugter Weise der Zapfen 6 gekürzt, wie mittels der gestrichelten Linie 24 angedeutet. Nachfolgend wird das in der Mundhöhle angefertigte Metallgerüst in bekannter Weise in einem Dentallabor in einen geeigneten beispielsweise Werkstoff Kunststoff, wie Acryl, eingebettet und die Prothese oder Brücke mit Kronen komplettiert. Die Kappen und somit der Zahnersatz oder die prothetische Versorgung werden nachfolgend mit den zugeordneten Aufbauteilen durch Kleben, Schrauben, Zementieren oder dergleichen verbunden.

Gemäß Fig. 2 ist der Übergangsbereich 26 von der Kappe 2 zum Zapfen 6 als Hohlkehle ausgebildet und mit einem Radius 28 versehen, welcher zweckmäßig mit dem Radius des hier nicht weiter dargestellten Verbindungselements 18 übereinstimmt. Hierdurch wird zum einen ein vergrößerter Kontaktbereich zwischen dem Verbindungselement 18 und dem Zapfen 6 erreicht und zudem wird eine Kerbwirkung zumindest reduziert. Ferner wird in Folge des vergrößerten Kontakt- und Verbindungsbereiches eine hohe Stabilität erreicht. Der Übergangsbereich 26 bzw die Hohlkehle erstrecken sich bevorzugt über den gesamten Umfang, bezogen auf die Längsachse 22.

Bei der Ausführungsform gemäß Fig. 3 ist im Übergangsbereich 26 eine Vertiefung bzw. Nut 30 vorgesehen, deren Radius vorteilhaft dem Radius des Verbindungselements 18 entspricht. Hierdurch wird der Kontaktbereich der Schweißverbindung ebenso wie die Stabilität vergrößert und zudem wird der Abstand der Schweißverbindung zum Implantat und zum Kieferknochen in vorteilhafter Weise reduziert.

Gemäß Fig. 4 ist insbesondere im Hinblick auf eine Reduzierung der Kerbwirkung der Radius 28 im Übergangsbereich optimiert, wodurch ferner eine hohe Belastbarkeit und Stabilität erreicht wird.

Gemäß der in Fig. 5 dargestellten besonderen Ausführungsform ist eine Vertiefung bzw. Nut 32 vorgesehen, welche auch in den Zapfen 6 hineinragt, und zwar derart, dass der Abstand sowohl zur Längsachse 22 als auch zum Dentalimplantat bzw. zum Kieferknochen in vorteilhafter Weise reduziert ist. Auch bei dieser Ausführungsform ist der Radius der Vertiefung bzw. Nut 32 dem Radius des Verbindungselements oder des Drahtes 18 angepasst, wodurch in bevorzugter Weise die Schweiß- oder Verbindungsfläche weiter vergrößert ist.

Der Übergangsbereich 26 oder die Hohlkehle 30 oder die Vertiefung bzw. Nut 32 erstrecken sich über den gesamten Umfang, bezogen auf die Längsachse 22.

In alternativen Ausgestaltungen weist das Verbindungselement 18 eine von der zylindrischen oder kreisförmigen Form abweichende Außenkontur auf, bspw. eine polygonale oder eine ovale Außenkontur. Für derartige Außenkonturen sind die Kontur oder Formgebung des Übergangsbereiches 26 und/oder der Vertiefung bzw. Nut 32 entsprechend derart angepasst, dass ein großer Verbindungsbereich, insbesondere Schweißbereich, mit dem Verbindungselement 18 vorhanden ist. Durch derartige Anpassungen wird in bevorzugter Weise mit einem geringen Material- und Fertigungsaufwand und bei kompakter Bauweise eine hohe Stabilität des Metallgerüstes des Zahnersatzes erreicht.

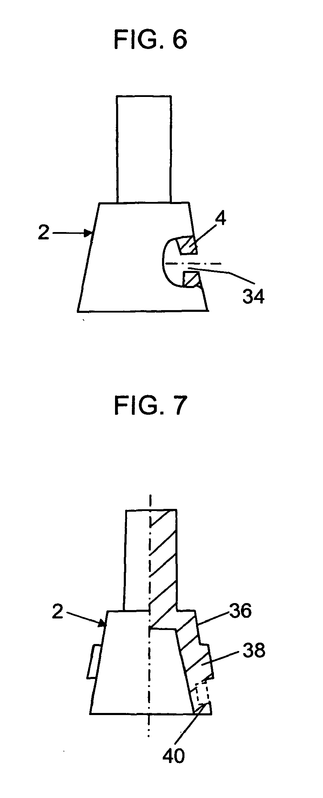

Das in Fig. 6 dargestellte Ausführungsbeispiel der Kappe 2 enthält im Mantel 4 eine Durchgangsbohrung 34. Durch diese Bohrung 34 kann eine Schraube zur Festlegung der Kappe 2 auf dem vorgenannten Aufbauteil des Dentalimplantats eingeschraubt werden.

Gemäß Fig. 7 enthält die Kappe 2 wenigstens eine oder mehrere über die Außenfläche 36 vorstehende Retentionen 38. Zusätzlich oder alternativ können in die Außenfläche 36, wie mit gestrichelter Linie angedeutet, Retentionen eingebracht sein. Mittels derartiger Retentionen wird eine funktionssichere, insbesondere hinsichtlich Rotation, Festlegung der Kappe im Werkstoff einer Prothese oder Brücke erreicht.

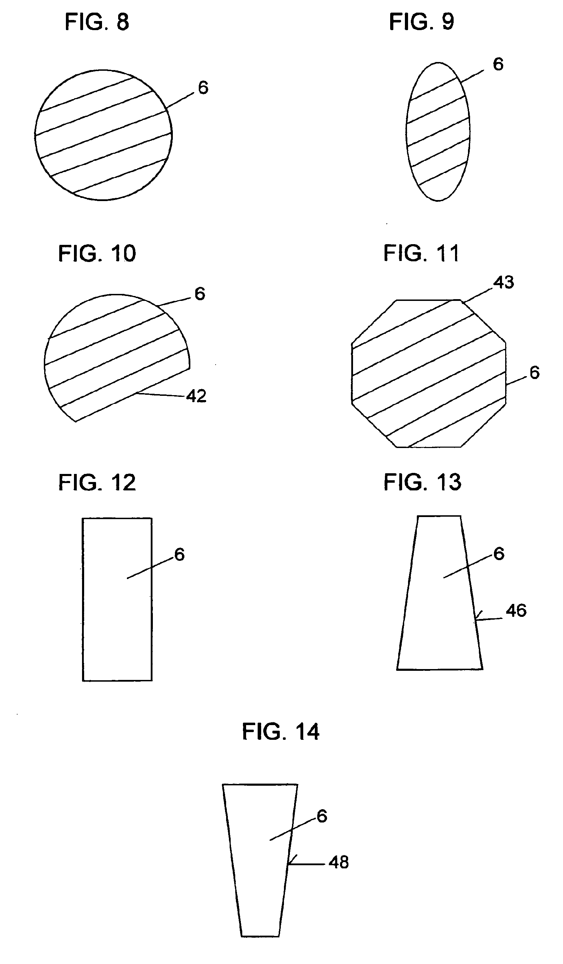

In Fig. 8 bis 11 sind verschiedene Querschnitte des Zapfens 6 dargestellt. Gemäß Fig. 8 ist der Zapfen rotationssymmetrisch ausgebildet. Der in Fig. 9 dargestellte Zapfen 6 weist einen elliptischen Querschnitt auf, wodurch in bevorzugter Weise der Abstand der Schweißverbindung zur Längsachse frei vorgebbar ist und zwar durch Drehen der Kappe um die Längsachse. Gemäß Fig. 10 weist der Zapfen 6 eine abgeflachte Fläche 42 auf, aufgrund derer der Kontaktbereich bzw. die Schweißfläche des Verbindungselements in vorteilhafter Weise vergrößert ist. Gemäß der Fig. 11 dargestellten besonderen Ausführungsform ist eine polygonale Querschnittsfläche mit beispielsweise acht Ecken 44 vorgesehen, wobei im Rahmen der Erfindung auch eine andere Anzahl der Ecken vorgegeben werden kann.

Fig. 12 bis 14 zeigen verschiedenen Seitenansichten des Zapfens 6, wobei der Einfachheit halber der gemäß Zeichnung nach unten anschließende Mantel der Kappe sowie die vorstehend beschriebenen Übergangsbereiche nicht dargestellt sind. Es sei darauf hingewiesen, dass je nach den Anforderungen die unterschiedlichen, vorstehend erläuterten, Übergangsbereiche vorgesehen werden können. Der in Fig. 12 dargestellte Zapfen 6 ist entsprechend den Ausführungsformen gemäß Fig. 1 bis 7 zylindrisch ausgebildet. Gemäß Fig. 13 ist die Außenfläche des Zapfens 6 konisch ausgebildet und verjüngt sich weg vom Übergangsbereich bzw. vom Mantel. Gemäß der in Fig. 14 dargestellten Ausführungsform verjüngt sich die Außenfläche 48 in Richtung hin zum Übergangsbereich.

### Bezugszeichen

- 2: Kappe
- 4: Mantel
- 6: Zapfen
- 8: Spitze von 4
- 10: Hohlraum in 2
- 12: Decke
- 14: Durchmesser von 8
- 16: Durchmesser von 6
- 17: Fase / Abrundung
- 18: Verbindungselement / Draht
- 20: Fläche
- 22: Längsachse
- 24: gestrichelte Linie
- 26: Übergangsbereich / Hohlkehle
- 28: Radius
- 30, 32: Vertiefung / Nut
- 34: Durchgangsbohrung
- 36: Außenfläche von 2
- 38, 40: Retention
- 42: Abflachung
- 44: Ecke
- 46, 48: Außenfläche von 6

## Patentansprüche

1. Zahnersatz enthaltend ein Metallgerüst mit wenigstens einer Kappe (2), welche mit einem Aufbauteil eines Dentalimplantats verbindbar ist, sowie mit einem Verbindungselement (18), welches in der Mundhöhle eines Patienten mit der Kappe (2) verbunden ist, wobei die Kappe (2) eine Spitze (8) und innen einen Hohlraum (10) enthält, in welchen durch eine der Spitze (8) gegenüberliegende Öffnung das Aufbauteil einsetzbar ist, wobei im Bereich der Spitze (8) der Kappe (2) ein Zapfen (6) als axiale Verlängerung angeordnet ist und das als ein Draht ausgebildete Verbindungselement (18) mit dem Zapfen (6) verbunden ist,
**dadurch gekennzeichnet, dass** die Kappe (2) einen konischen Mantel (4) enthält und der Hohlraum (10) der Kappe (2) im Bereich der Spitze (8) geschlossen ausgebildet ist, dass der Zapfen (6) einen Durchmesser (16) aufweist, welcher um einen vorgegebenen Wert und/oder erheblich kleiner ist als der Durchmesser (14) der Kappe (2) im Bereich der Spitze (8), wobei zwischen dem Zapfen (6) und dem konischen Mantel (4) die Kappe (2) außen einen Übergangsbereich (26) aufweist, welcher im Wesentlichen rechtwinklig ausgebildet ist oder einen Radius (28) aufweist, und dass das Verbindungselement (18) mit der Außenfläche (46, 48) des Zapfens (6) durch Schweißen oder Löten oder Kleben verbunden ist.

2. Zahnersatz nach Anspruch 1, **dadurch gekennzeichnet, dass** die Kappe (2) eine Decke (12) aufweist, mit welcher der Zapfen (6) verbunden ist.

3. Zahnersatz nach Anspruch 1 oder 2, **dadurch gekennzeichnet, dass** die Kappe (2) mit dem Zapfen (6) einteilig ausgebildet ist.

4. Zahnersatz nach einem der Ansprüche 1 bis 3, **dadurch gekennzeichnet, dass** der Übergangsbereich (26) sich im Wesentlichen über den gesamten Umfang, bezogen auf die Längsachse (22), erstreckt.

5. Zahnersatz nach einem der Ansprüche 1 bis 4, **dadurch gekennzeichnet, dass** im Übergangsbereich (26) eine Nut (30) vorgesehen ist, welche sich axial in die Kappe (2) erstreckt.

6. Zahnersatz nach einem der Ansprüche 1 bis 4, **dadurch gekennzeichnet, dass** im Übergangsbereich (26) eine Vertiefung (32) vorgesehen ist, welche sich radial nach innen zur Längsachse (22) erstreckt.

7. Zahnersatz nach Anspruch 5, **dadurch gekennzeichnet, dass** die Nut (30) an die Außenkontur des Verbindungselements (18) angepasst ist.

8. Zahnersatz nach einem der Ansprüche 1 bis 4, **dadurch gekennzeichnet, dass** der Radius (28) an den Durchmesser des Verbindungselements (18) angepasst ist.

9. Zahnersatz nach einem der Ansprüche 1 bis 8, **dadurch gekennzeichnet, dass** der Zapfen (6) eine kreisförmige oder ovale oder polygonale oder eine Abflachung (42) aufweisende Querschnittsfläche aufweist.

## Claims

1. A dental prosthesis comprising a metal frame having at least one cap (2), which can be connected to an abutment of a dental implant as well as having a connecting element (18), which is connected to the cap (2) in the patient's oral cavity, wherein the cap (2) comprises a tip (8) and a cavity (10) into which the abutment can be inserted through an opening opposite the tip (8), wherein a pin (6) is arranged as an axial extension in the region of the tip (8) of the cap (2) and the connecting element (18) designed as a wire is connected to the pin (6),
**characterized in that** the cap (2) comprises a conical jacket (4) and the cavity (10) of the cap (2) is designed to be closed in the region of the tip (8); the pin (6) has a diameter (16) that is definitely smaller by a predefined amount and/or is considerably smaller than the diameter (14) of the cap (2) in the region of the tip (8), wherein the cap (2) has a transition region (26) on the outside between the pin (6) and the conical jacket (4), this transition region (26) being designed to be essentially rectangular or having a radius (28), and the connecting element (18) is connected to the outer surface (46, 48) of the pin (6) by welding or soldering or gluing.

2. The dental prosthesis according to Claim 1, **characterized in that** the cap (2) has a ceiling (12) to which the pin (6) is connected.

3. The dental prosthesis according to Claim 1 or 2, **characterized in that** the cap (2) is designed in one piece with the pin (6).

4. The dental prosthesis according to any one of Claims 1 to 3, **characterized in that** the transition region (26) extends essentially over the entire circumference, based on the longitudinal axis (22).

5. The dental prosthesis according to any one of Claims 1 to 4, **characterized in that** a groove (30), which extends axially into the cap (2), is provided in the transition region (26).

6. The dental prosthesis according to any one of Claims 1 to 4, **characterized in that** a recess (32), which extends radially inward to the longitudinal axis (22), is provided in the transition region (26).

7. The dental prosthesis according to Claim 5, **characterized in that** the groove (30) is adapted to the outer contour of the connecting element (18).

8. The dental prosthesis according to any one of Claims 1 to 4, **characterized in that** the radius (28) is adapted to the diameter of the connecting element (18).

9. The dental prosthesis according to any one of Claims 1 to 8, **characterized in that** the pin (6) has a circular or oval or polygonal cross-sectional surface or has a cross-sectional surface with a flattened region (42).

## Revendications

1. Prothèse dentaire comprenant un support métallique avec au moins un capuchon (2), lequel peut être relié à un élément d'assemblage d'un implant dentaire, ainsi qu'avec un élément de raccord (18) qui est relié au capuchon (2) dans la cavité buccale d'un patient, dans laquelle le capuchon (2) comprend une pointe (8) et un espace creux (10) à l'intérieur dans lequel l'élément d'assemblage peut être mis en place à travers une ouverture située en vis-à-vis de la pointe (8), dans laquelle, dans la zone de la pointe (8) du capuchon (2), un moignon (6) est disposé en tant que prolongement axial et l'élément de raccord (18) réalisé en tant que fil métallique étant relié au moignon (6),
**caractérisée en ce que** le capuchon (2) comprend une enveloppe conique (4) et **en ce que** l'espace creux (10) du capuchon (2) est réalisé de manière close dans la zone de la pointe (8), **en ce que** le moignon (6) présente un diamètre (16) qui est inférieur de l'ordre d'une valeur prescrite et/ou est nettement inférieur au diamètre (14) du capuchon (2) dans la zone de la pointe (8), dans laquelle, entre le moignon (6) et l'enveloppe conique (4), le capuchon (2) présente à l'extérieur une zone de transition (26) qui est réalisée sensiblement en angle droit ou bien présente un rayon (28), et **en ce que** l'élément de raccord (18) est relié à la surface extérieure (46, 48) du moignon (6) par soudage ou brasage ou collage.

2. Prothèse dentaire selon la revendication 1, **caractérisée en ce que** le capuchon (2) présente un plafond (12) avec lequel le moignon (6) est relié.

3. Prothèse dentaire selon la revendication 1 ou 2, **caractérisée en ce que** le capuchon (2) est réalisé d'un seul tenant avec le moignon (6).

4. Prothèse dentaire selon l'une des revendications 1 à 3, **caractérisée en ce que** la zone de transition (26) s'étend sensiblement sur l'ensemble de la circonférence compte tenu de l'axe longitudinal (22).

5. Prothèse dentaire selon l'une des revendications 1 à 4, **caractérisée en ce que** l'on prévoit une rainure (30) dans la zone de transition (26), laquelle s'étend axialement dans le capuchon (2).

6. Prothèse dentaire selon l'une des revendications 1 à 4, **caractérisée en ce que** l'on prévoit un creux (32) dans la zone de transition (26), lequel s'étend radialement vers l'intérieur par rapport à l'axe longitudinal (22).

7. Prothèse dentaire selon la revendication 5, **caractérisée en ce que** la rainure (30) est adaptée au contour extérieur de l'élément de raccord (18).

8. Prothèse dentaire selon l'une des revendications 1 à 4, **caractérisée en ce que** le rayon (28) est adapté au diamètre de l'élément de raccord (18).

9. Prothèse dentaire selon l'une des revendications 1 à 8, **caractérisée en ce que** le moignon (6) présente une superficie de section circulaire ou ovale ou polygonale ou présentant un aplatissement (40).
